# EUROPÄISCHE PATENTANMELDUNG

(11) **EP 2 112 628 A1**
(43) Veröffentlichungstag der Anmeldung: **28.10.2009**
(21) Anmeldenummer: 08007777.9
(22) Anmeldetag: 22.04.2008
(51) Int. Cl.: G06Q 30/00

(54) **Werbe-Vorrichtung**

(71) Anmelder: DIRALIS INTERNATIONAL LIMITED, Bramhall Stockport Cheshire SK7 2DH (GB)
(72) Erfinder: Seitlinger, Günter, D-83395 Freilassing (DE)
(74) Vertreter: DTS Zürich

(57) **Zusammenfassung**

Die Erfindung bezieht sich auf eine Werbe-Vorrichtung 10 umfassend mindestens einen Terminal 20, einen Server 30, wobei der Terminal 20 über eine Datenleitung 23 mit dem Server 30 verbunden ist und der Terminal 20, ein Touchscreen 40 umfasst, das in mindestens zwei Anzeigeelemente 41 unterteilbar ist, mit einem abgesetzten Bildschirm 50 über eine drahtlose Verbindung 25 verbunden ist und einen Drucker 60 zum Drucken von Gutscheinen umfasst.

## Beschreibung

Die vorliegende Erfindung bezieht sich auf eine Werbevorrichtung zum Anzeigen von Werbung.

Aus dem Stand der Technik bzw. aus der deutschen Schrift DE 60 209 330 T2 ist ein Werbeterminalnetzwerk bekannt, welches zumindest einen Werbeterminal, einen Sender/Empfänger zur drahtlosen Kommunikation mit tragbaren Vorrichtungen in der Nähe des Terminals aufweist und einen Datenspeicher, der mit dem zumindest einen Werbeterminal kommuniziert, um die Eigentümer der tragbaren Vorrichtungen zu identifizieren, um ein Profil der identifizierten Eigentümer zu erzeugen und um eine auf die identifizierten Eigentümer zielgerichtete Werbung anzuzeigen.

Aufgabe der Erfindung war es, eine Werbevorrichtung bereitzustellen, wobei die Kommunikation unter den einzelnen Komponenten so zu optimieren war, dass Werbung ohne Datenverlust oder sehr große Störungen angezeigt werden kann.

Diese Aufgabe wird durch die erfindungsgemäße Vorrichtung gemäß den unabhängigen Ansprüchen gelöst. Weitere vorteilhafte Ausgestaltungen der Erfindung sind in den abhängigen Ansprüchen definiert.

Gemäß eines ersten Aspekts der vorliegenden Erfindung wird eine Werbevorrichtung (10) umfassend mindestens einen Terminal (20), einen Server (30) bereitgestellt, wobei der Terminal (20) über eine Datenleitung (23) mit dem Server (30) verbunden ist und der Terminal (20) ein Touchscreen (40) umfasst, das in mindestens zwei Anzeigeelemente (41) unterteilbar ist, mit einem abgesetzten Bildschirm (50) über eine drahtlose Verbindung (25) verbunden ist und einen Drucker (60) zum Drucken von Gutscheinen umfasst.

Vorteil dieser Konfiguration ist es, dass man von einem Server über mindestens einen Werbeterminal an den jeweiligen abgesetzten Bildschirm Werbungsinformation verschicken kann, ohne dass größere Störungen auftreten, beispielsweise Bilder unverzerrt ankommen und Datenverlust vermieden wird.

Der Terminal ist bevorzugt das Bindeglied zwischen abgesetztem Bildschirm und Server. Der Terminal nimmt bevorzugt Daten (beispielsweise in Form von Werbeinformation oder Instruktionen für technische Einstellungen oder Updates, usw.) des Servers entgegen und verarbeitet diese bevorzugt selbst, besonders bevorzugt leitet er diese Daten an den abgesetzten Bildschirm weiter, am meisten bevorzugt speichert der Terminal diese Daten. Die Beziehung zwischen Server und dem oder der Terminal(s) wird bevorzugt als Master-Slave-Beziehung bezeichnet, wobei der Server bevorzugt die Position des Masters einnimmt. Dies bedeutet, dass Befehlsinformation bevorzugt in eine Richtung vom Server aus an alle Terminals gesendet wird. Der Terminal ist bevorzugt eine Rechnereinheit, besonders bevorzugt ein herkömmlicher PC mit Arbeitsspeicher, Festplattenspeicher, Bildschirm, usw. Der Terminal ist bevorzugt ein eingebauter Terminal (beispielsweise in eine Wand), besonders bevorzugt ein freistehender Terminal (als beispielsweise ein Sockel). Der Terminal befindet sich bevorzugt in Gegenden hoher Personendichte oder an Orten des Konsumgütervertriebs, besonders bevorzugt in Gegenden, wo sich Personen mit hoher Kaufbereitschaft aufhalten, beispielsweise in Einkaufszentren, in Supermärkten, in Bekleidungsgeschäften, in Fast-Food-Restaurants, usw. Ist der Terminal ein freistehender Terminal, so ist dieser bevorzugt in ein Aluminiumgehäuse, besonders bevorzugt ein Stahlgehäuse, am meisten bevorzugt in ein Kunststoffgehäuse eingekleidet. Der Terminal ist bevorzugt so ausgelegt, dass eine Person durchschnittlicher Größe den im Terminal eingebauten Bildschirm auf Augenhöhe hat. Die Höhe im Falle eines freistehenden Terminals variiert bevorzugt zwischen einem Meter und zwei Meter, besonders bevorzugt zwischen 1,20 m und 1,80 m, am meisten bevorzugt zwischen 1,40 und 1,60 m.Die Breite des Terminals beträgt bevorzugt zwischen 20 cm und 1 m, besonders bevorzugt zwischen 30 cm und 75 cm, am meisten bevorzugt zwischen 40 cm und 50 cm. Die Tiefe beträgt bevorzugt zwischen 10 cm und 70 cm, besonders bevorzugt zwischen 15 cm und 55 cm, am meisten bevorzugt zwischen 20 cm und 40 cm.

Der Terminal ist über eine Datenleitung mit dem Server bzw. über eine drahtlose Verbindung mit dem abgesetzten Bildschirm verbunden. Die Datenraten und Bandbreiten variieren bevorzugt je nach Bundesland, Land, Staatenverbund, usw.

Der Terminal umfasst u.a. ein Touchscreen, welches die cursorfreie bzw. mausfreie Bedienung der Benutzeroberfläche des Terminals ermöglicht. Das Touchscreen ist bevorzugt in der oberen Hälfte des Terminals, besonders bevorzugt im oberen Drittel des Terminals eingebaut. Das Touchscreen ist bevorzugt ein analogresistives Touchscreen, besonders bevorzugt ein kapazitives Touchscreen. Das Touchscreen hat eine Bilddiagonale von bevorzugt zwischen 17 Zoll und 27Zoll, besonders bevorzugt zwischen 18 Zoll und 25 Zoll, am meisten bevorzugt zwischen 19 Zoll und 23 Zoll.

Das Touchscreen ist bevorzugt so in das Terminalgehäuse eingebaut, dass die Bildschirmfläche des Touchscreens bündig in das Gehäuse übergeht. Bevorzugt befindet sich vor dem Touchscreen eine Schutzscheibe.

Das Touchscreen ist in mindestens zwei Anzeigeelemente unterteilbar. Das Anzeigeelement wird bevorzugt als ein Teil der Bildschirmfläche definiert. Dieser Teil der Bildschirmfläche kann jegliche geometrische Form, beispielsweise Kreise oder Kreissektoren oder Kreissegmente oder Vierecke oder Quadrate oder Rechtecke annehmen. Bevorzugt sind die Anzeigeelemente, welche das Touchscreen einteilen, gleich groß (bezogen auf die Fläche), besonders bevorzugt symmetrisch aufgeteilt. Die Anzeigeelemente geben bevorzugt Werbeinformation wieder. Diese Werbeinformation wird bevorzugt als Inhalt einer Bilddatei, besonders bevorzugt als Inhalt einer Videodatei, am meisten bevorzugt als Inhalt einer Sprachdatei verstanden. Bevorzugt zeigen die Anzeigeelemente die identische Werbeinformation an, besonders bevorzugt zeigen die Anzeigeelemente unterschiedliche Werbeinformationen an. Bevorzugt ist der Touchscreen in ein Raster von gleich großen Rechtecken eingeteilt, wobei die Anzahl der Rechtecke bevorzugt zwischen 2 und 40 , am meisten bevorzugt zwischen 9 und 32, am meisten bevorzugt zwischen 12 und 28 Rechtecken liegt, insbesondere bevorzugt weist der Touchscreen 24 Anzeigeelemente auf.

In einer weiteren bevorzugten Ausführungsform wird auf den Anzeigeelementen (41) des Touchscreens (40) Information im Splitscreen-Verfahren oder im Picture-in-Picture-Verfahren bereitgestellt.

Diese Information ist, wie bereits beschrieben, Werbeinformation, welche bevorzugt aus Ton- oder Bild- oder Videodateien besteht. Splitscreen-Verfahren werden bevorzugt verschiedene Werbeinformationen auf dem selben Touchscreen bereitgestellt, welche auf unterschiedliche Quellen zurückgreifen. Angenommen der Touchscreen zeigt 16 Felder an. Dann wird bevorzugt auf Anzeigeelement 1 (d.h. Feld 1) die Information wiedergegeben, welche auf Speicherplatz 1 des Terminalspeichers gespeichert ist. Für alle folgenden Felder funktioniert die Anzeige bzw. der Speicherzugriff identisch. So ist es möglich beispielsweise unterschiedliche Bilder oder Videos auf verschiedenen Anzeigeelementen anzuzeigen.

Die Werbevorrichtung umfasst des Weiteren mindestens einen Server, welche oder welcher zentral die Terminals steuert. Ein Server versorgt bevorzugt mehrere Terminals mit Daten. Bevorzugt wird über dem Server die auf jedem einzelnen Terminal anzuzeigende Werbeinformation gespeichert. Der Server übernimmt bevorzugt die gesamte Steuerung der Verlosung von Gutscheine und anderer Gewinne aus dem "Time to WIN" System. Die Terminals haben des Weiteren die Aufgabe die Werbungen, die vom Server gesendet wurden, bevorzugt im "Cash" zwischen zu speichern und in der Folge auf dem jeweiligen Bildschirm anzuzeigen. Die Server und die Terminals kommunizieren bevorzugt über Nummern. Beispielsweise ist der Terminal mit der Nr. 123 dem Server mit der Nr. 23 zugeteilt. Der jeweilige Terminal meldet sich bevorzugt immer bei diesem Server mit der eigenen Nummer an. Weiters informiert der Terminal bevorzugt über seinen technischen Zustand. Dazu gehört beispielsweise ein Statusreport über den Zustand der Terminalkomponenten. Ist ein Fehler aufgetreten oder ein Ausfall zu verzeichnen, wird dies bevorzugt dem zuständigen Server gemeldet. Bevorzugt sind alle Server der Werbevorrichtung mit einem Zentralrechner verbunden. Dieser Zentralrechner wird bevorzugt von einem Diralis-Mitarbeiter bedient. Die Statusinformation über beschädigte Komponenten werden bevorzugt über die Server an den Zentralrechner gesandt und dort gespeichert.

Die Werbevorrichtung umfasst des Weiteren einen abgesetzten Bildschirm. Dieser Bildschirm ist bevorzugt ein handelsüblicher Flachbildfernseher, besonders bevorzugt ein Computermonitor. Bevorzugt ist der abgesetzte Bildschirm ein CRT-Monitor, ein LC-Display, ein TFT-Bildschirm, ein SED-Monitor, ein Plasma-Bildschirm, ein OLED-Monitor. Bevorzugt kommuniziert der abgesetzte Bildschirm direkt mit dem Terminal, besonders bevorzugt über ein Zusatzgerät mit dem Terminal. Der abgesetzte Bildschirm hat bevorzugt eine Bilddiagonale von 30 bis 40 Zoll, besonders bevorzugt von 32 Zoll.

Bevorzugt wird auf dem abgesetzten Bildschirm die Werbeinformation aus gezielt einem Anzeigeelement, besonders bevorzugt die Werbeinformation aus allen Anzeigeelementen angezeigt. Dabei kann die Werbeinformation der Anzeigeelemente in Sequenzen nacheinander angezeigt bzw. gleichzeitig angezeigt werden. Berührt eine Person ein bestimmtes Anzeigeelement auf dem Touchscreen mit einer bestimmten Werbeinformation, so wird diese bevorzugt auf dem abgesetzten Bildschirm angezeigt, besonders beovrzugt läuft die Werbeinformation in einer Endlosschleife weiter.

In einer weiteren bevorzugten Ausführungsform umfasst der abgesetzte Bildschirm (50) einen PC (70).

Der PC dient bevorzugt dazu, Dateninformation des Terminals aufzunehmen, diese zu verarbeiten und an den abgesetzten Bildschirm weiterzuleiten. Bevorzugt ist der PC ein externes Gerät, d.h. befindet sich außerhalb des abgesetzten Bildschirms, besonders bevorzugt ist der PC Bestandteil des abgesetzten Bildschirms, d.h. ist in dem abgesetzten Bildschirm eingebaut. Bevorzugt dient der PC als Zwischenspeichermedium der Werbeinformationsdaten auf dem Weg vom Terminal zum abgesetzten Bildschirm, besonders bevorzugt bereitet der PC diese Werbeinformation mit seiner Grafikkarte auf, so dass der Bildschirm eine lediglich abspielende Funktion einnimmt. Bevorzugt ist der PC ein PC mit allen standardmäßigen Komponenten, besonders bevorzugt ist der PC ein PC in "abgespeckter" Form mit beispielsweise nur einem Prozessor, einer Grafikkarte und einem Speicher.. Bevorzut ist der PC im zusätzlichen Bildschirm so ausgelegt, dass die Bilder zwischengespeichert werden können und auf dem zusätzlichen Bildschirm in Form einer Endlosschleife abgespielt werden können.

Des Weiteren umfasst die Werbevorrichtung bzw. der Terminal einen Drucker. Der Drucker ist bevorzugt in das Gehäuse des Terminals eingebaut. Der Drucker ist bevorzugt ein Laserdrucker oder ein Farblaserdrucker oder ein LCD-/LCS-Drucker oder ein Nadeldrucker oder ein Zeilendrucker oder ein Tintenstrahldrucker oder ein Thermodrucker oder ein Thermotransferdrucker oder ein Farbdrucker oder ein Etikettendrucker. Der Drucker druckt bevorzugt Gewinngutscheine. Diese Gutscheine enthalten bevorzugt eine Gewinninformation, wie beispielsweise eine Angabe über eine Preisreduktion in Prozent auf einen bestimmten Artikel oder ein bestimmtes Artikelsortiment oder über einen Einkaufsfreibetrag für ein bestimmtes Geschäft oder Restaurant oder über eine kostenlose Autowäsche oder über ein Gratisinserat in einer Zeitung.

In einer weiteren bevorzugten Ausführungsform ist die Datenleitung (23) eine VPN-Leitung.

Eine VPN-Leitung ist eine Datenleitung, welche Teil eines virtuellen privaten Netzwerkes ist. Bevorzugt bilden der oder die Server mit dem oder den Terminals ein virtuelles privates Netzwerk. Dabei sind bevorzugt die Terminals sogenannte VPN-Partner. Die VPN-Partner können über verschiedene Arten in das Netzwerk eingegliedert werden. Mögliche Netzwerkauslegungen sind bevorzugt Side-to-End-VPN oder End-to-End-VPN oder Side-to-Side-VPN.

Im Bereich der Drahtlosen Verbindung wird bevorzugt eine SSL Verschlüsselung verwandt, da hier bevorzugt nur kleine Datenmengen transferiert werden. Die SSL Verschlüsselung umfasst bevorzugt eine Verschlüsselung mit 124.

In einer weiteren bevorzugten Ausführungsform ist die drahtlose Verbindung (25) eine WLAN-Verbindung.

Bevorzugt verbindet die WLAN-Verbindung den Terminal mit mindestens einem abgesetzten Bildschirm, besonders bevorzugt mit zwei, am meisten bevorzugt mit drei Bildschirmen. Dabei fungiert bevorzugt der Terminal als Basisstation, d.h. access point und übernimmt damit die Koordination der Clients, d.h. der abgesetzten Bildschirme. Die WLAN-Verbindung ermöglicht ein variables Aufstellen des oder der abgesetzten Bildschirme.

In einer weitern bevorzugten Ausführungsform ist die drahtlose Verbindung eine Funkverbindung. Diese Ausführungsform der drahtlosen Funkverbindung findet bevorzugt Anwendung, wenn Aufstellbereich des Terminals bzw. des abgesetzten Monitors eine erhöhte Dichte von WLAN Verbindungen bereits besteht.
In einer weiteren bevorzugten Ausführungsform wird der abgesetzte Bildschirm innerhalb eines Radius von bevorzugt 40 m, besonders bevorzugt 30 m, am meisten bevorzugt von 20 m, insbesondere bevorzugt von 10 m zum Terminal aufgestellt.

Innerhalb dieses angegebenen Radius wird der abgesetzte Bildschirm bevorzugt an einer Wand montiert, besonders bevorzugt auf einen Ständer gestellt, am meisten bevorzugt an der Decke aufgehängt.

In einer weiteren bevorzugten Ausführungsform wird der abgesetzte Bildschirm bevorzugt über dem Terminal angebracht.

Dies bedeutet, dass der abgesetzte Bildschirm mit der Bildschirmunterkante sich räumlich gesehen über der abgrenzenden Oberkante des Terminals befindet.

In einer weiteren bevorzugten Ausführungsform ist zwischen dem abgesetzten Bildschirm (50), dem Terminal (20) und dem Server (30) ein erstes Datenpaket (80) mit Information über den Übertragungsstatus übertragbar.

Das erste Datenpaket dient bevorzugt zur Kontrolle der Datenleitung(en) zwischen Server und Terminal bzw. zwischen Terminal und abgesetztem Bildschirm. Die Übertragung solcher erster Datenpakete erfolgt bevorzugt in der Richtung Server -> Terminal -> abgesetzter Bildschirm, d.h. eindirektional. Bevorzugt wird nur eine Kurzinformation vom abgesetzten Bildschirm bzw. dem Terminal an den Server zurückgesendet, welche den Erhalt des ersten Datenpakets bestätigt.

Bevorzugt enthält das erste Datenpaket nur Information über die Größe der in Folge zu verschickenden zweiten Datenpakete (der Werbeinformation in Ton-, Bild- oder Videoformat). Beispielsweise schickt der Server ein erstes Datenpaket mit der Größe 50 Bit über eine VPN-Leitung an den Terminal, welcher dieses erste Datenpaket speichert und auswertet. Die Information, die dieses erste Datenpaket enthält, informiert den Terminal bevorzugt darüber, dass das folgende Datenpaket beispielsweise eine Größe von 5 MB aufweist. Diese Information wird bevorzugt vom Terminal über die WLAN-Verbindung an den abgesetzten Bildschirm gesendet, wo diese Information ebenfalls gespeichert wird.

Nach dem Versand dieser Kurzinformation in Form eines ersten Datenpakets wissen bevorzugt der Terminal und der abgesetzte Bildschirm, welche Datenmenge übertragen werden wird bzw. auch ankommen muss, damit eine einwandfreie Wiedergabe der Werbeinformation garantiert werden kann.

Bevorzugt lässt sich aus dem ersten Datenpaket eine Kontrollfunktion ableiten. Kommen nämlich bei einem der beiden genannten Netzwerkpunkte (Terminal, abgesetzter Bildschirm) weniger Daten an (weil beispielsweise der Server zu wenig Daten geschickt hat oder Daten auf dem Weg verloren gegangen sind, usw.), wissen die beiden Komponenten (Terminal und/oder abgesetzter Bildschirm) automatisch, dass zu wenig Information angekommen ist, da Sie vorher durch das erste Datenpaket darüber informiert wurden welche Datenmenge ankommen soll. Nun fordert der Terminal oder der abgesetzte Bildschirm so lange beim Server die Daten an, bis die gesamte durch das erste Datenpaket "versprochene" Datenmenge empfangen wurde. Ist die Datenmenge, welche durch das erste Datenpaket definiert wurde, beim jeweiligen Punkt, also Terminal und Bildschirm angekommen, wird die Nachfrage bevorzugt gestoppt.

Bevorzugt wird aufgrund der Information des ersten Datenpaketes eine VPN-Leitung zwischen Server und Terminal mit spezieller Bandbreite und Übertragungsrate eingerichtet. Die Bandbreite und Übertragungsrate der VPN-Leitung richtet sich bevorzugt nach der zu übertragenden Datenmenge des dem ersten Datenpaket nachstehenden größeren, zweiten Datenpakets. Ist das erste Datenpaket mit der kleinen Information eindirektional beim Bildschirm über den Terminal angekommen, sendet der abgesetzte Bildschirm bevorzugt eine Information über den Terminal an den Server zurück. Diese Information zeigt dem Server bevorzugt an, dass mit der eigentlichen Transaktion der großen Datenmengen begonnen werden kann.

In einer weiteren bevorzugten Ausführungsform ist das erste Datenpaket (80) auf dem Terminal (20) sowie auf dem PC (70) des abgesetzten Bildschirms (50) speicherbar.

In einer weiteren bevorzugten Ausführungsform ist das erste Datenpaket (80) kleiner als 100 Bit.

Bevorzugt bewegt sich die Größe des ersten Datenpakets zwischen 100 bit und 10 bit, besonders bevorzugt zwischen 70 bit und 20 bit, am meisten bevorzugt zwischen 30 bit und 50 bit.

In einer weiteren bevorzugten Ausführungsform ist zwischen dem abgesetzten Bildschirm (50), dem Terminal (20) und dem Server (30) ein zweites Datenpaket (90) mit Bildinformation oder Videoinformation oder Sprachinformation übertragbar.

Das zweite Datenpaket beinhaltet bevorzugt die Information, welche auf dem Touchscreen bzw. auf dem abgesetzten Bildschirm angezeigt werden soll. Diese Information wird bevorzugt auf dem Terminal bzw. auf dem PC oder dem abgesetzten Bildschirm gespeichert. Das zweite Datenpaket ist bevorzugt dem ersten Datenpaket zugeordnet. Bevorzugt tritt ein zweites Datenpaket nur in Verbindung mit einem ersten Datenpaket auf, wobei das erste Datenpaket bevorzugt immer dem zweiten Datenpaket vorgelagert ist (zeitlich gesehen). Ist die Übertragung des zweiten Datenpakets abgeschlossen, d.h. auf dem Terminal und auf dem abgesetzten Bildschirm gespeichert, wird eine Information an den Server zurück übertragen. Bevorzugt wird das in dem zweiten Datenpaket gespeicherte Werbematerial genau einem Anzeigeelement zugeordnet. Bevorzugt wird beim Drücken eines Anzeigeelements die Werbeinformation, welche auf diesem Anzeigeelement hinterlegt ist, nun auf dem Terminal und auf dem abgesetzten Bildschirm angezeigt. Es besteht folglich bevorzugt keine Notwendigkeit, bei einer Berührung eines Anzeigeelements die geforderte Information vom Server zu laden, sondern diese Information muss lediglich aus dem Speicher des Terminals bzw. des abgesetzten Bildschirms auf die jeweiligen Monitore übertragen werden.

In einer weiteren bevorzugten Ausführungsform ist das erste Datenpaket (80) um mindestens einen Faktor 10⁶ kleiner als das zweite Datenpaket (90).

Das zweite Datenpaket hat bevorzugt die Größe von 2 MB bis 20 MB, besonders besvorzugt die Größe von 4 MB bis 10 MB, besonders bevorzugt die Größe von 5 MB bis 8 MB.

In einer weiteren bevorzugten Ausführungsform ist auf dem Touchscreen (30) eine achtfeldrige Scheibe anzeigbar.

Die achtfeldrige Scheibe ist eine animierte Scheibe, welche bevorzugt nach dem Abspielen eines Werbefilms auf dem Touchscreen angezeigt wird. Bevorzugt besteht die achtfeldrige Scheibe aus einem Kreis im Mittelpunkt und acht Kreissegmenten, welche rund um den mittleren Kreis symmetrisch angeordnet sind. Dabei sind die Kreissegmente bevorzugt gleich groß. Auf den einzelnen Kreissegmenten sind bevorzugt Gewinnangaben zu sehen, wie beispielsweise ca.30%, ca.10%, TV-Gutschein, usw..

Nach dem die achtfeldrigen Scheibe aktiviert wurde, beginnt diese bevorzugt sich zu drehen, d.h. ein die Felder leuchten nacheinander auf. Wenig später endet die Rotation und ein Feld bleibt erleuchtet. Ist auf diesem Feld ein Gewinn hinterlegt, wird dieser bevorzugt auf einen Gutschein ausgedruckt.

In einer weiteren bevorzugten Ausführungsform umfasst der Terminal (20) ein Eingabeelement (100).

Bevorzugt ist das Eingabeelement des Terminals eine Tastatur und/oder eine Maus und/oder ein Joystick und/oder ein Trackball. Mit Hilfe der Eingabeelemente kann der Terminal bevorzugt als normaler PC z.B. zum Schreiben von E-Mails, zum Surfen im Internet usw. verwendet werden.

In einer weiteren bevorzugten Ausführungsform umfasst der Terminal (20) eine Webcam (110).

Die Web-Cam kann bevorzugt bei IP-Telefonaten eingesetzt werden, um den Gesprächspartner zu sehen.

In einer weiteren bevorzugten Ausführungsform umfasst der Terminal (20) ein Mikrofon (120).

In einer weiteren bevorzugten Ausführungsform umfasst der Terminal (20) ein Telefon (130).

In einer weiteren bevorzugten Ausführungsform umfasst der Terminal (20) einen Kartenleser (140).

Der Kartenleser ist bevorzugt ein taktiler Kartenleser, d.h. ein Kartenleser, in den eine Karte eingeführt werden muss bzw. ein Kartenleser, auf den eine Karte aufgelegt werden muss, besonders bevorzugt ein berührungsloser Kartenleser, welcher aus einer gewissen Entfernung die Karte erkennt und die Informationen auf der Karte erfassen kann. Bevorzugt handelt es sich bei den zu einzulesenden Karten um Kundenkarten eines Shoppingcenters, einer Supermarktkette, eines Kaufhauses, eines Restaurants, eines Kaffeehauses, usw. Die Karte enthält bevorzugt Information über die Identität des Nutzers, bzw. das Kaufverhalten des Nutzers. Diese Information kann bevorzugt verwendet werden, um Gutscheine zu drucken, welche auf das Kaufverhalten des Kartennutzers passen. Kauft ein Kunde bevorzugt beim Supermarkt X oder Bekleidungsgeschäft Y ein, können genau für diese Geschäfte Gutscheine erstellt werden um beispielsweise einen weiteren Einkauf des Kartennutzers in diesen Geschäften zu fördern.

In der Figurenbeschreibung werden weitere bevorzugte Ausführungsformen dargestellt. Die Figuren zeigen:

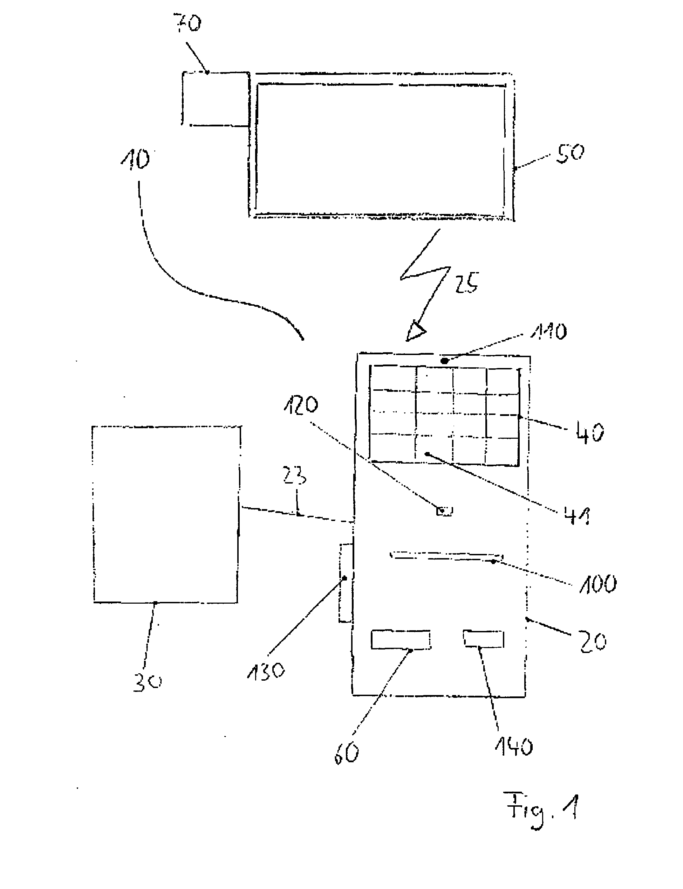

- **Fig. 1**: eine schematische Darstellung einer Werbevorrichtung.

**Figur 1** zeigt eine Werbevorrichtung 10 bestehend aus den drei Grundelementen, dem Terminal 20, welcher einerseits über eine Datenleitung 23 mit dem Server 30, andererseits über eine drahtlose Verbindung 25 mit dem abgesetzten Bildschirm 50 verbunden ist. Integriert in den abgesetzten Bildschirm 50 ist ein PC 70, mit welchem die eigentliche Kommunikation mit dem Terminal 20 über die drahtlose Verbindung 25 stattfindet. Der Server 30 und der Terminal 20 sind Teil eines VP-Netzwerks, wobei der Server 30 über eine VPN-Leitung (Datenleitung 23) mit dem Terminal 20 verbunden ist. Der Terminal 20 umfasst ein Touchscreen 40, welches in 16 Anzeigeelemente 41 unterteilt ist. Jedes Anzeigeelement 41 ist ein Rechteck und genauso groß wie die anderen Anzeigeelemente 41. Des Weiteren umfasst der Terminal 20 einen Drucker 60 zum Drucken von Gewinngutscheinen, eine Tastatur 100, eine Webcam 110, ein Mikrofon 120, ein Telefon 130 sowie einen Kartenleser 140.

In einem ersten Schritt wird Werbeinformation von dem Server 30 auf die Speicher des Terminals 20 sowie des abgesetzten Bildschirms 50 bzw. dessen PC 70 übertragen bzw. dort gespeichert. Die Werbeinformation, welche auf dem Server 30 bereitsteht, ist für jeden einzelnen Terminal 20 personalisiert, was bedeutet, dass auf unterschiedlichen Terminals unterschiedliche Arten von Werbematerial, d.h. Filmen bzw. Bildern gespeichert werden können. In diesem Fall müssen auf dem Server 20 16 Bilder zum Ausfüllen der 16 Anzeigeelemente 41 auf den Speicher des Terminals 20 geladen werden. Des Weiteren müssen 16 Filme, zugehörig zu einem der 16 Bilder ebenfalls auf den Speicher des Terminals 20 geladen werden. Beim Berühren eines Werbebildes auf einem Anzeigeelement 41 soll der Werbefilm ablaufen, welcher zu dem jeweiligen Werbefoto verlinkt ist. Wird ein Werbefoto auf einem Anzeigeelement 41 ausgewählt (man berührt den Touchscreen an dieser Stelle) bzw. damit ein Werbefilm, verschwinden die restlichen Anzeigeelemente 41 und der Film wird im Großformat auf dem gesamten Touchscreen abgespielt. Des Weiteren soll der identische Film auf dem abgesetzten Bildschirm 50 zu sehen sein. Die ebenfalls auf dem Speicher des abgesetzten Bildschirms 50 bzw. des PCs 70 gespeicherten Videodateien werden über eine kurze Information des Terminals, welche über die Wireless LAN-Verbindung (drahtlose Verbindung 25) erfolgt, aktiviert.

Um die Werbeinformation, d.h. beispielsweise die Videodateien oder Bilder auf den Speichern des abgesetzten Bildschirms 50 und des Terminals 20 durch neues Werbematerial zu ersetzen, läuft folgender Prozess ab. Auf dem Server 30 liegt ein neues Video bereit, welches ein Video auf dem Terminal 20 ersetzen soll. Der Server 30 schickt nun ein erstes Datenpaket über die VPN-Leitung 23 an den Terminal 20, wobei das erste Datenpaket nur 50 Bit groß ist und testen soll, ob die Bandbreite bzw. die Übertragungsrate der VPN-Leitung 23 ausreicht, um die Datenmenge des neuen Films von 5 MB übertragen zu können. Die Information, welche in dem ersten Datenpaket gespeichert ist, informiert den Terminal 20 darüber, dass ein zweites Datenpaket mit einer Videodatei der Größe 5 MB folgen wird. Das erste Datenpaket wird auf dem Speicher des Terminals 20 gespeichert und des Weiteren über die WLAN-Verbindung 25 an den abgesetzten Bildschirm 50 gesendet, wo es ebenfalls gespeichert wird. Sobald diese Information des ersten Datenpakets auf dem Server 20 bzw. dem abgesetzten Bildschirm 50 gespeichert ist, sind diese beiden Komponenten der Werbevorrichtung empfangsbereit für die 5 MB große Videodatei. Das zweite Datenpaket mit der entsprechenden Videodatei wird nun über die VPN-Leitung 23 vom Server 30 auf den Terminal 20 bzw. den Bildschirm 50 übertragen und dort gespeichert. Die Videodatei ersetzt nun eine der 16 bereits existierenden Videodateien, wobei zusätzlich ein Bild aus dem Video extrahiert wird, welches in einem der Anzeigeelemente 41 zu sehen sein wird. Des Weiteren wird das Anzeigeelement bzw. dieses Feld auf dem Touchscreen 40 mit dem neuen Video verlinkt.

Über das Eingabeelement 100, die Webcam 110, das Mikrofon 120 bzw. das Telefon 130 können an dem Terminal beispielsweise E-Mails geschrieben werden, über beispielsweise Skype (eingetragene Marke) mit Freunden kommuniziert werden oder mit dem Telefon 130 Telefongespräche über IP geführt werden. Während dieser Kommunikation oder dieser Eingabe wird man teilweise von einem der auf dem Terminal gespeicherten Werbefilme unterbrochen, so dass man diesen anschauen muss, wenn man eines der Geräte 100, 110, 120 oder 130 weiter benutzen möchte.

Des Weiteren wird, nachdem eine Person ein Anzeigeelement auf dem Touchscreen 40 gedrückt hat und der zugehörige Werbefilm abgelaufen ist, ein "Time-to-Win"-System aktiviert. Dabei wird auf dem Touchscreen 40 eine achtfeldrige Scheibe (wie im oberen Teil der Beschreibung erläutert) angezeigt. Diese Scheibe beginnt sich zu drehen, wobei beim Stillstand der Scheibe eines der acht Felder erleuchtet bleibt und dem Kunden bzw. der Person ihren Gewinn anzeigt. Leuchtet beispielsweise das Feld "30%", wird dem Kunden über den Drucker 60 ein Gutschein mit einer Reduktionsoption von ca.30% auf Produkte aus dem Kaufhaus, vor welchem der Terminal steht, ausgedruckt. Die Person kann den Gutschein nun in dem Kaufhaus einlösen.

Des Weiteren ist es möglich, über den Kartenleser 140 eine Kundenkarte in den Terminal 20 einzuschieben oder eine Karte an den berührungslosen Kartenleser 140 zu halten, wobei man dem System im Falle einer Einkaufskundenkarte seine Identität sowie die Höhe des letzten Einkaufs und den daraus folgenden Warenkorb preisgibt. Darauf kann dann die Werbeinformation und das "Time-to-Win"-Gewinnspiel abgestimmt werden.

### Bezugszeichenliste

- 10: Vorrichtung
- 20: Terminal
- 23: Datenleitung
- 25: Drahtlose Verbindung
- 30: Server
- 40: Touchscreen
- 41: Anzeigeelement
- 50: Abgesetzter Bildschirm
- 60: Drucker
- 70: PC
- 80: Erstes Datenpaket
- 90: Zweites Datenpaket
- 10: Eingabeelement
- 110: Web-Cam
- 120: Mikrofon
- 130: Telefon
- 140: Kartenleser

## Patentansprüche

1. Werbe-Vorrichtung 10 umfassend mindestens einen Terminal 20, einen Server 30
**dadurch gekennzeichnet, dass**
der Terminal 20 über eine Datenleitung 23 mit dem Server 30 verbunden ist und der Terminal 20, ein Touchscreen 40 umfasst, das in mindestens zwei Anzeigeelemente 41 unterteilbar ist, mit einem abgesetzten Bildschirm 50 über eine drahtlose Verbindung 25 verbunden ist und einen Drucker 60 zum Drucken von Gutscheinen umfasst.

2. Vorrichtung 10 nach Anspruch 1 wobei der abgesetzte Bildschirm 50 einen PC 70 umfasst.

3. Vorrichtung 10 nach einem der Ansprüche 1 und 2, wobei die Datenleitung 23 eine VPN Leitung ist.

4. Vorrichtung 10 nach einem der Ansprüche 1 bis 3, wobei die drahtlose Verbindung 25 eine WLAN Verbindung ist.

5. Vorrichtung 10 nach einem der Ansprüche 1 bis 4, wobei zwischen abgesetztem Bildschirm 50, Terminal 20 und Server 30 ein erstes Datenpaket 80 mit Information über den Übertragungsstatus übertragbar ist.

6. Vorrichtung 10 nach einem der Ansprüche 1 bis 5, wobei dieses erste Datenpaket 80 auf dem Terminal 20 sowie auf dem PC 70 des abgesetzten Bildschirms 50 speicherbar ist.

7. Vorrichtung 10 nach einem der Ansprüche 1 bis 6, wobei das erste Datenpaket 80 kleiner als 100 bit ist.

8. Vorrichtung 10 nach einem der Ansprüche 1 bis 7, wobei zwischen abgesetztem Bildschirm 50, Terminal 20 und Server 30 ein zweites Datenpaket 90 mit Bildinformation oder Videoinformation oder Sprachinformation übertragbar ist.

9. Vorrichtung 10 nach einem der Ansprüche 1 bis 8, wobei das erste Datenpaket 80 um mindestens einen Faktor 10⁶ kleiner ist als das zweite Datenpaket 90.

10. Vorrichtung 10 nach einem der Ansprüche 1 bis 9, wobei auf den Anzeigeelementen 41 des Touchscreens 40 im Splitscreen-Verfahren Information bereitgestellt wird.

11. Vorrichtung 10 nach einem der Ansprüche 1 bis 10, wobei auf dem Touchscreen 30 eine achtfeldrige Scheibe anzeigbar ist.

12. Vorrichtung 10 nach einem der Ansprüche 1 bis 11, wobei der abgesetzte Bildschirm 50 innerhalb eines Radius von 20m zum Terminal 20 aufgestellt ist.

13. Vorrichtung 10 nach einem der Ansprüche 1 bis 12, wobei der abgesetzte Bildschirm 50 über dem Terminal 20 angebracht wird.

14. Vorrichtung 10 nach einem der Ansprüche 1 bis 13, wobei der Terminal 20 ein Eingabeelement 100 umfasst.

15. Vorrichtung 10 nach einem der Ansprüche 1 bis 14, wobei der Terminal 20 eine Web-Cam 110 umfasst.

16. Vorrichtung 10 nach einem der Ansprüche 1 bis 15, wobei der Terminal 20 ein Mikrofon 120 umfasst.

17. Vorrichtung 10 nach einem der Ansprüche 1 bis 16, wobei der Terminal 20 ein Telefon 130 umfasst.

18. Vorrichtung 10 nach einem der Ansprüche 1 bis 17" wobei der Terminal 20 einen Kartenleser 140 umfasst.
